## Europäisches Patentamt
## European Patent Office
## Office européen des brevets

(11) Publication number: **0 060 977 B1**

# EUROPEAN PATENT SPECIFICATION

(45) Date of publication of patent specification: **12.11.86**

(51) Int. Cl.⁴: **G 11 B 5/127,** G 11 B 5/29, G 11 B 5/17

(21) Application number: **82100711.9**

(22) Date of filing: **02.02.82**

(54) Method of manufacturing a multi-element magnetic transducing head.

(30) Priority: **19.03.81 US 245562**

(43) Date of publication of application:
**29.09.82 Bulletin 82/39**

(45) Publication of the grant of the patent:
**12.11.86 Bulletin 86/46**

(84) Designated Contracting States:
**DE FR GB NL**

(56) References cited:
**WO-A-82/01615**
**DE-B-2 507 557**
**JP-A-51 113 721**
**US-A-3 353 261**
**US-A-3 626 396**
**US-A-4 114 259**
**Patent Abstracts of Japan, vol. 3. no. 71, 20. June 1979, page 156E118**
**Patent Abstracts of Japan, vol. 3, no. 156, 21 December 1979, page 59E161**
**Patent Abstracts of Japan, vol. 1, no. 18, 24. March 1977, page 484E76**

(73) Proprietor: **International Business Machines Corporation**
**Old Orchard Road**
**Armonk, N.Y. 10504 (US)**

(72) Inventor: **Robinson, Neil Lloyd**
**12425 E. Suttermill Street**
**Tucson Arizona 85715 (US)**
Inventor: **Silkensen, Ralph Donald**
**8137 E. Knollwood Terrace**
**Tucson Arizona 85715 (US)**

(74) Representative: **Lewis, Alan John**
**IBM United Kingdom Limited Intellectual Property Department Hursley Park**
**Winchester Hampshire SO21 2JN (GB)**

Courier Press, Leamington Spa, England.

## Description

This invention relates to multi-element magnetic transducing heads for use, for example, in high track density magnetic disk storage system.

Multi-element magnetic transducing heads have been developed for magnetic tape machines, for reading or recording data on a multiplicity of tape tracks simultaneously. Some magnetic disk files, have employed similar multitrack magnetic heads, but their use has been limited to applications permitting a relatively large vertical dimension, requiring in particular relatively large spacings between adjacent disks of a multiple disk store. An example is shown in US Patent 3,579,214, which describes a multiple head assembly in which each head has an associated wound coil. Such coils occupy a significant amount of space, and in applications involving very closely spaced multiple recording media, such as flexible or floppy disk files in which adjacent disks are closely adjacent, space considerations are significant. In addition to the consideration of space between disks, the density of the data tracks on the surface of each disk is a major concern.

German specification No. 2,507,557 (UK 1,494,840) discloses a method of manufacturing a multiple element magnetic transducing head comprising forming a magnetic assembly comprising a pair of elongate ferrite components bonded together to define an elongate magnetic gap therebetween; cutting the assembly to form a pattern of slots extending into the assembly at regularly spaced intervals along its length; fitting a series of plates into the slots; bonding the plates in the slots with a low melting point glass and thereafter machining the assembly to a required configuration.

Japanese specifications No. 51-115810 discloses a method of manufacturing a multiple element magnetic transducing head from two similar magnetic assemblies. Each assembly comprises a ferrite block having a row of parallel, spaced grooves formed in it to provide a row of lands. The top edge of each land is recessed and a U-shaped bridge piece is secured to the top edge so that a magnetic circuit, including a magnetic gap, is formed by the land and the bridge piece. The two assemblies are inter-fitted and secured together.

U.S. specification No. 4,114,259 discloses a magnetic head assembly in which the component assemblies are located relative to one another during manufacture by reference surfaces provided on the assemblies.

U.S. specification No. 3,626,396 discloses a linear array of recording heads, each comprising a copper wedge with ferrite pole pieces extending along the sloping faces. The transducer gap is formed at the apex of the wedge. The magnetic circuit is completed by a magnetic layer deposited over an insulating layer formed on the base of the wedge. To sense changes of magnetic flux in the circuit a copper conductor is deposited on the base of the wedge before the insulating layer is formed thereon. The conductor forms a single turn winding linked with the magnetic circuit.

Japanese specification No. JA—A—51-113721 discloses a method of manufacturing a multiple element magnetic transducing head comprising forming two similar magnetic assemblies each comprising a pair of elongate ferrite components bonded together to define an elongate magnetic gap therebetween; cutting the two assemblies to form complementary patterns of slots extending into the assemblies to interrupt the gap at regularly spaced intervals along its length to define in each assembly a number of regularly spaced, individually gapped, transducing sections; inter-fitting the two assemblies with the slots of each assembly accommodating the transducing section of the other assembly; and bonding the inter-fitting transducer sections into the slots to secure the assemblies together as a unitary structure with the transducing sections separated from one another by a bonding material.

International patent application PCT/US81/01375, published as WO—82/01615 on 13 May 1982, is comprised in the state of the art pursuant to Article 54(3) and (4) and discloses a thin film magnetic transducer. The transducer comprises a generally rectangular shaped magnetic core, one limb of which is encircled by a multiple turn conductive coil. The coil is formed by deposition techniques and includes a first plurality of thin coil-turn-forming-pieces formed by etching away unwanted portions of a deposited gold layer. A layer of insulating material is then deposited over the coil-turn-forming-pieces leaving the end bare. The core structure is then formed by a series of deposition steps and embedded in a layer of polymide. Openings are then etched through the polymide layer in registry with the bare ends of the coil-turn-forming-pieces and the openings filled by electro-plating with gold to form the side riser portions of the coil turns. A sputtering process is then used to deposit a second plurality of gold coil-turn-forming-pieces inter-connecting the side risers.

While the foregoing documents describe various methods of manufacturing multiple element magnetic transducing heads, each method has its particular limitation. It is an object of the invention to provide an improved method of manufacturing such heads which reduces or eliminates some or all of the limitations of known methods.

Accordingly the invention provides a method of manufacturing a multiple element magnetic transducing head comprising forming two similar magnetic assemblies each comprising a pair of elongate ferrite components bonded together to define an elongate magnetic gap therebetween; cutting the two assemblies to form complementary patterns of slots extending into the assemblies to interrupt the gap at regularly spaced intervals along its length to define in each assembly a number of regularly spaced, individually gapped, transducing section; inter-fitting the two assemblies with the slots of each assembly accommodating the transducing section of the other assembly; bonding the interfitting transducer sections into the slots to secure the assemblies together as a unitary structure with the transducing sections separated from one another by the bonding material; said method being characterised by the steps of machining the unitary structure to form a head assembly comprising a row of magnetically separated transducer sections having a profiled upper transducing surface and a lower surface; and thereafter completing each transducer section by depositing a first predetermined pattern of conductor elements on the lower surface thereof, depositing insulating material over regions of the conductor elements aligned along the length of the transducer section, depositing a strip of magnetically permeable material having a central portion overlying the insulating material and end portions respectively contacting the ferrite material to complete the return magnetic flux path of the transducing section, depositing insulating material over the magnetic strip, and depositing a second predetermined pattern of conductor elements in co-operative registry with the first pattern of conductor elements so that the two patterns of elements form a continuous multi-turn winding surrounding the return flux path formed by the magnetic strip.

A preferred embodiment of the invention will now be described with reference to the accompanying drawings in which;

FIGURE 1 is an isometric view of a machined and glassed ferrite part to be used in the assembly of the magnetic head of this invention;

FIGURE 2 is an isometric illustration, partly cut away, of the machined parts to be interlocked during the processing and assembly of the magnetic head of this invention (two assemblies as described in Fig. 1 make up the composition of Fig. 2);

FIGURE 3 is an isometric view of the interlocked magnetic head parts;

FIGURE 4 is an isometric top view of the final magnetic head assembly of this invention;

FIGURE 5 is a bottom view of a single track of the joined magnetic head assembly, depicting the thin film coil structures associated with one element of the multiple elements and tracks of the magnetic head assembly, wherein one such coil would be present on each track; and

FIGURE 6 is a sectional view AA, taken through Fig. 5.

Similar numerals refer to similar elements throughout the drawing.

The scales and proportions of the Figures are not necessarily consistent and are varied for convenience and to aid in the explanation of the invention.

## Description of the Preferred Embodiment

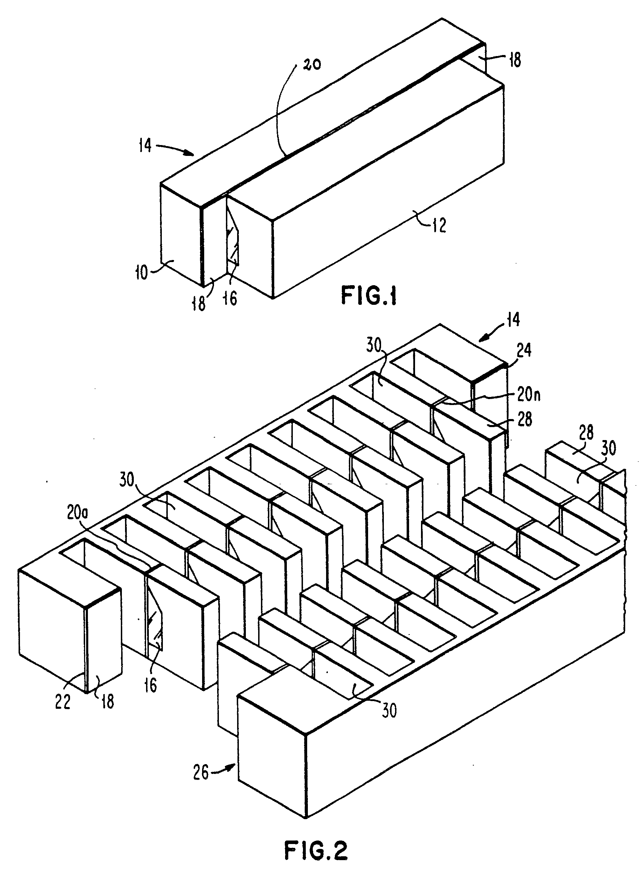

With reference to Figs. 1—3, a rectangular ferrite block 10 is joined to a shaped ferrite section 12 by means of a high temperature glass in a fluid state to form a sandwich assembly 14. The ferrite section 12 includes a channel 16 that determines the back gap of the multi-element magnetic head that is being formed. The glass bonding layer or shim 18 serves to define transducing gaps 20-an, respectively, for each of a multiplicity of head elements of the finished magnetic head assembly. The glass shim 18 also is disposed on reliefs or reference surfaces 22, 24 at the ends of the ferrite block 10 to enable proper engagement of the sandwich assembly 14 with a second ferrite sandwich assembly 26.

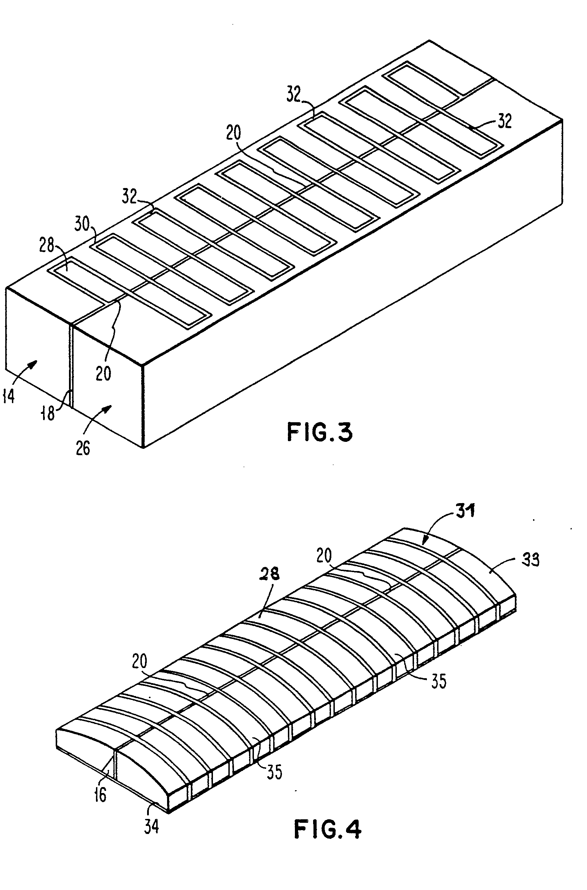

To mate the two sandwich assemblies 14 and 26, uniformly spaced rectangular slots 30 are machined and cut through each of the ferrite sections and glass bonds into the ferrite blocks of the sandwich assemblies, thereby forming alternating fingers or projections 28. The projections 28 are dimensioned to provide a close fit with the opposing slots 30, with the allowance of relatively small spacing between the projections and slots to enable insertion of a low temperature bonding glass 32 in a fluid state. The sandwich assemblies are aligned and positioned in engaging relation so that the relief surfaces 22 and 24 abut the opposing relief surfaces of the sandwich assembly 26. When the opposing sandwich assemblies 14 and 26 are joined, as depicted in Fig. 3, the transducing gaps 20 of each head element are aligned in seriatim along the central longitudinal axis of the joined head assembly.

In accordance with this invention, the top and bottom surfaces of the joined sandwich assemblies are lapped to achieve a low contoured head assembly, as depicted in Fig. 4. The top surface 33 is lapped and polished to produce a low contoured arcuate configuration, in which the vertical height from the bottom surface 34 to the contoured face is substantially less than the width or length of said head assembly. The bottom surface 34 of the head assembly is lapped and polished to a high degree of flatness so as to accept thin film layers that will form the conductive coil and a flux path for the magnetic head circuitry. The segments 35 of the head structure shown in Fig. 4 represent discrete head elements, including discrete transducing gaps 20.

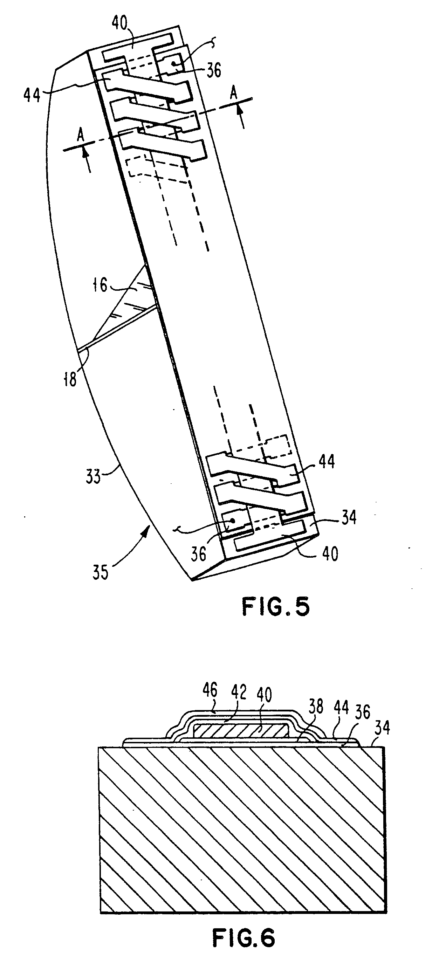

To complete the multi-element head assembly, a patterned conductive thin film layer 36 which may be gold or copper for example, is vacuum deposited on the bottom surface 34 of the head assembly (see Fig. 6). An insulating layer 38 of $Al_2O_3$ is sputter-deposited on the conductive layer 36, leaving the end portions of the layer 36 exposed. A thick bar type layer 40 of Permalloy, of about 3 mil thickness, is then sputter-deposited on the insulator 38 to provide a flux path for the magnetic circuit of the head. The ends of the flux path bar 40 are in intimate contact with the ferrite surface of the head assembly, as shown in Fig. 5.

Thereafter, another insulating layer 42 of $Al_2O_3$ is deposited on the Permalloy flux path bar, still leaving the ends of the conductive layer 36 exposed. A second patterned conductive thin film layer 44 is then formed by vacuum deposition, by way of example, so as to connect with the exposed ends of the first conductive layer 36, thereby closing a conductive path which is disposed around the flux bar 40. Finally, an insulating passivation layer 46, which may be $Al_2O_3$, is sputter-deposited to complete an assembly of the multi-turn thin film coil and flux path bar for each head element.

It should be understood that the invention is not limited to the specific materials, processes or dimensions recited above. For example, the conductive elements of the coil may be made from aluminum or other conductive materials and may be electroplated, patterned by etching, lift-off, or plate-through instead of by vacuum deposition. Also, the insulating layers may be made of polymide or photoresist, and by photolithography and baking. In addition, instead of using thick Permalloy for the flux path bar, laminated Permalloy and silicon dioxide layers may be used and may be patterned by reactive ion etching. Other changes and modifications may be made within the scope of the invention.

## Claims

1. A method of manufacturing a multiple element magnetic transducing head comprising forming two similar magnetic assemblies (14) each comprising a pair of elongate ferrite components (10, 12) bonded together to define an elongate magnetic gap (20) therebetween; cutting the two assemblies to form complementary patterns of slots (30) extending into the assemblies to interrupt the gap (20) at regularly spaced intervals along its length to define in each assembly a number of regularly spaced, individually gapped, transducing sections (28); interfitting the two assemblies with the slots (30) of each assembly accommodating the transducing section (28) of the other assembly; bonding the inter-fitting transducer sections (28) into the slots (30) to secure the assemblies together as a unitary structure with the transducing sections (28) separated from one another by a bonding material (32); said method being characterised by the steps of machining the unitary structure to form a head assembly (31) comprising a row of magnetically separated transducer sections having a profiled upper transducing surface (33) and a lower surface (34); and thereafter completing each transducer section (28) by depositing a first predetermined pattern of conductor elements (36) on the lower surface (34) thereof, depositing insulating material (38) over regions of the conductor elements (36) aligned along the length of the transducer section, depositing a strip (40) of magnetically permeable material having a central portion overlying the insulating material and end portions respectively contacting the ferrite material to complete the return magnetic flux path of the transducing section (28), depositing insulating material (42) over the magnetic strip (40), and depositing a second predetermined pattern of conductor elements (44) in co-operative registry with the first pattern of conductor elements (36) so that the two patterns of elements (36, 44) form a continuous multi-turn winding surrounding the return flux path formed by the magnetic strip (40).

2. A method as claimed in claim 1, including the further step of forming an elongate channel (16) in one of each pair of ferrite components (10, 12) prior to bonding the components (10, 12) together, the channel (16) being positioned on an inner surface of the assembly to define a back gap region for each of the subsequently formed transducing sections (28).

3. A method as claimed in claim 2, in which the inner surface of one of each pair of ferrite components extends beyond the surface of the other component to which it is bonded, to form a reference surface to abut a corresponding reference surface on the other assembly during subsequent bonding of the two assemblies.

## Patentansprüche

1. Verhahren zur Herstellung eines Mehrfach-Magnetwandlerkopfes, welches das Ausbilden zweier gleichartiger Magnetaufbauten (14), von denen jeder ein Paar langgestreckter Ferritkomponenten (10, 12) aufweist, welche einen langgestreckten Magnetspalt (20) zwischen sich definierend miteinander verbunden sind; das Schneiden der beiden Aufbauten zur Ausbildung komplementärer Muster von Schlitzen (30), welche sich in die Aufbauten erstrecken und den Spalt (20) in regelmäßigen Abständen entlang seiner Länge unterbrechen, um so in jedem Aufbau eine Anzahl von in regelmäßigem Abstand liegenden, einzeln mit einem Spalt versehenen Wandlerabschnitten (28) zu definieren; das Ineinandersetzen der beiden Aufbauten so, daß die Schlitze (30) eines jeden Aufbaus die Wandlerabschnitte (28) des anderen Aufbaus aufnehmen; das Einverbinden der ineinandergesetzten Wandlerabschnitte (28) in die Schlitze (30) zur wechselseitigen Verbindung der Aufbauten als einheitliche Struktur mit durch ein Verbindungsmaterial (32) voneinander getrennten Wandlerabschnitten (28) umfaßt und gekennzeichnet ist durch die Verfahrensschritte der Bearbeitung der einheitlichen Struktur zur Ausbildung eines Kopfaufbaus (31) welcher eine Reihe aus magnetisch getrennten Wandlerabschnitten mit einer profilierten oberen Wandlerfläche (33) und einer unteren Fläche (34) aufweist; und des nachfolgenden Vervollständigens eines jeden Wandlerabschnitts (28) durch Abscheiden eines ersten bestimmten Musters von Leiterelementen (36) auf der unteren Fläche (34) desselben, Abscheiden eines isolierenden Materials (38) über Bereichen der Leiterelemente (36), die längs der Länge des Wandlerabschnitts ausgerichtet sind, Abscheiden eines Streifens (40) aus magnetisch permeablem Material mit einem Mittelabschnitt, der über dem isolierenden Material liegt, und Endabschnitten, die zur Vervollständigung des Rückweges des magnetischen Flusses des Wandlerabschnitts (28) jeweils das Ferritmaterial berühren, Abscheiden eines isolierenden Materials (42) über dem magnetischen Streifen (40) und Abscheiden eines zweiten bestimmten Musters von Leiterelementen (44) in zusammenwirkender Ausrichtung auf das erste Muster von Leiterelementen (36), so daß die beiden Muster von Elementen (36, 44) eine kontinuierliche Wicklung mit mehreren Windungen bilden, welche den durch den magnetischen Streifen (40) gebildeten Flußrückweg umgibt.

2. Verfahren nach Anspruch 1, welches den weiteren Verfahrensschritt des Ausbildens eines langgestreckten Kanals (16) in einer von jeweils einem Paar von Ferritkomponenten (10, 12) vor dem Verbinden der Komponenten (10, 12) umfaßt, wobei der Kanal (16) zur Definierung eines Rückspaltbereichs für jeden der nachfolgend ausgebildeten Wandlerabschnitte (28) auf einer Innenfläche des Aufbaus angeordnet ist.

3. Verfahren nach Anspruch 2, bei welchem sich die Innenfläche einer eines jeden Paares von Ferritkomponenten über die Fläche der anderen Komponente, mit der sie verbunden ist, hinauserstreckt, um so eine Bezugsfläche zu bilden, welche beim nachfolgenden Verbinden der beiden Aufbauten an eine entsprechende Bezugsfläche des anderen Aufbaus anstößt.

**Revendications**

1. Procédé de fabrication d'une tête de transducteur magnétique à éléments multiples dans lequel on forme deux ensembles magnétiques similaires (14) comprenant chacun une paire d'éléments en ferrite allongés (10, 12) liés ensemble pour délimiter entre-eux un entrefer allongé (20), on découpe les deux ensembles pour former des motifs complémentaires de fentes (30) s'étendant dans les ensembles pour interrompre l'entrefer (20) à des intervalles régulièrement espacés suivant sa longueur pour délimiter dans chaque ensemble un certain nombre de sections de transducteurs (28) régulièrement espacées et ayant des entrefers individuels, on imbrique les deux ensembles avec les fentes (30) de chaque ensemble recevant la section de transducteur (28) de l'autre ensemble, on lie les sections (28) de transducteurs imbriquées dans les fentes (30) pour fixer les ensembles l'un à l'autre en une structure unitaire avec les sections de transducteur (28) séparées l'une de l'autre par une matière de liaison (32), ce procédé étant caractérisé par les phases consistant à: usiner la structure unitaire pour former un ensemble (31) de tête comprenant une rangée de sections de transducteur séparées magnétiquement ayant une surface supérieure (33) de transducteur profilée et une surface inférieure (34), et on complète ensuite chaque section de transducteur (28) en déposant un premier motif prédéterminé d'éléments conducteurs (36) sur sa surface inférieure (34), on dépose une matière isolante (38) sur des régions des éléments conducteurs (36) alignées suivant la longueur de la section de transducteur, on dépose une bande (40) d'une matière magnétiquement perméable ayant une portion centrale recouvrant la matière isolante et des portions d'extrémité en contact respectivement avec la matière ferrite pour compléter le trajet de retour du flux magnétique de la section (28) de transducteur, on dépose une matière isolante (42) sur la bande magnétique (40) et on dépose un second motif prédéterminé d'éléments conducteurs (44) en coincidence pour coopérer avec le premier motif d'éléments conducteurs (36), de façon que les deux motifs d'éléments (36, 44) forment un bobinage continu à spires multiples entourant le trajet de retour de flux formé par la bande magnétique (40).

2. Procédé suivant la revendication 1, comprenant en outre la phase consistant à former un canal allongé (16) dans l'une de chaque paire d'éléments en ferrite (10, 12) avant de lier les composants (10, 12) ensemble, le canal (16) étant situé sur une surface interne de l'ensemble pour délimiter une région d'entrefer arrière pour chaque section (28) de transducteur formée ensuite.

3. Procédé suivant la revendication 2, dans lequel la surface interne de l'une de chaque paire d'éléments en ferrite s'étend au-delà de la surface de l'autre élément auquel il est lié, pour former une surface de référence pour venir en butée avec une surface de référence correspondante sur l'autre ensemble lors de la liaison consécutive des deux ensembles.

FIG.1

FIG.2

FIG.3

FIG.4

FIG.5

FIG.6